# EUROPEAN PATENT SPECIFICATION

(11) **EP 1 637 557 B1**
(45) Date of publication and mention of the grant of the patent: **11.01.2012**
(21) Application number: 05020276.1
(22) Date of filing: 16.09.2005
(51) Int. Cl.: C08K 5/3492, C08K 5/24, C08K 5/25, C08K 5/13

(54) **Polyacetal resin composition**
Polyacetalzusammensetzung
Composition de résine de polyacétal

(30) Priority: 17.09.2004 JP 2004271005
(43) Date of publication of application: 22.03.2006
(73) Proprietor: MITSUBISHI GAS CHEMICAL COMPANY, INC., Tokyo 100-0005 (JP)
(72) Inventor: Sunaga, Daisuke Yokkaichi Plant of Mitsubishi, Yokkaichi-shi MIE 510-0886 (JP); Takeda, Yuji Yokkaichi Plant of Mitsubishi, Yokkaichi-shi MIE 510-0886 (JP); Okamura, Akira Yokkaichi Plant of Mitsubishi, Yokkaichi-shi MIE 510-0886 (JP); Nagai, Satoshi Yokkaichi Plant of Mitsubishi, Yokkaichi-shi MIE 510-0886 (JP)
(74) Representative: Albrecht, Thomas

(56) References cited:
- EP-A- 0 498 620
- EP-A- 1 264 858
- US-A1- 2004 010 064

## Description

### Field of the Invention

The present invention relates to a polyacetal resin composition and to a molded article thereof. More specifically, it relates to a polyacetal resin composition which has excellent thermal stability, suppresses the emission of formaldehyde from a pellet and molded article thereof, and rarely produces a mold deposit during molding and to a molded article thereof.

### Description of the Prior Art

A polyacetal resin is widely used in mechanical parts and electric parts as an engineering plastic having well balanced mechanical properties and excellent self-lubricating and electric properties. However, as the polyacetal resin has an oxymethylene group (-CH₂O-) in the main chain as a constituent unit, a trace amount of a mold deposit is produced by a thermal decomposition reaction in its heat history during polymerization or molding. This mold deposit contaminates a mold and causes a molding failure with the result of a poor appearance and a dimensional error. Further, it is reported that formaldehyde is emitted from the final product of the polyacetal resin and causes the "sick house" syndrome. In order to prevent the "sick house" syndrome, the Ministry of Heath and Welfare limits the indoor concentration of formaldehyde to 0.08 ppm or less by weight as a guideline. It is therefore desired that the emission of formaldehyde from the product should be suppressed.
Accordingly, a polyacetal resin which has little emission of formaldehyde from its final product is now in demand.

Heretofore, in order to suppress the emission of formaldehyde from a pellet and molded article containing a polyacetal resin, it has been proposed to mix various additives with the polyacetal resin. A resin composition comprising an amine-based antioxidant, carbon black pre-treated with a polymer compound and polyamide (JP-A 11-140272) (the term "JP-A" as used herein means an "unexamined published Japanese patent application"), a resin composition comprising a hydrazide compound(JP-A 04-345648), a resin composition comprising a borate of a nitrogen-containing compound such as hydrazide (JP-A 10-086630), a resin composition comprising 1,2,3,4-butanetetracarboxylic acid hydrazide which is a new compound as a formaldehyde adsorbent (JP-A 06-080619), and a deodorant comprising hydrazide and urea or a derivative thereof in a specific ratio (JP-A 2002-035098) are such examples. However, they are still unsatisfactory because they cannot suppress the emission of formaldehyde completely and deteriorate the physical properties of molded articles thereof. Consequently, a polyacetal resin composition which can suppress the emission of formaldehyde more has been desired.

### Summary of the Invention

It has been known that an amino-substituted triazine compound contributes to the improvement of thermal stability by trapping formaldehyde. However, when a hydrazide compound having the great effect of trapping formaldehyde is used and the amino-substituted triazine compound is added more than required, the hydrazide compound's function of trapping formaldehyde is reduced, thereby making it inevitable to add a larger amount of the hydrazide compound. It has been found that this impairs thermal stability and increases the amount of the mold deposit.

Further, a stabilizer such as a metal hydroxide, organic acid salt or inorganic acid salt has been used to deactivate formic acid formed by the oxidation of a formaldehyde gas generated by the residual catalyst or in the stabilization step. However, as even a trace amount of the stabilizer promotes the hydrolysis of the terminal group of a formic acid ester formed by a side reaction at the time of polymerization, when the polyacetal resin composition is left in a high-temperature and high-humidity environment for a long time, the emission of formaldehyde increases though thermal stability does not lower during molding. Therefore, it has been found that the amount of the hydrazide compound as a formaldehyde scavenger becomes large inevitably, thereby increasing the amount of the mold deposit as described above.

The inventor of the present invention has conducted intensive studies to solve the above problem and has found that when the amount of the amino-substituted triazine compound is 0.01 to 0.1 part by weight, the amount of the hydrazide compound can be minimized without impeding its reactivity. Further, an increase in the emission of formaldehyde when the polyacetal resin composition is kept at a high temperature and a high humidity for a long time can be suppressed and the addition of the hydrazide compound can be further reduced by setting the total content of metal compounds selected from the group consisting of hydroxides, inorganic acid salts and organic acid salts of an alkali metal and an alkali earth metal to 50 ppm or less by weight in terms of the total of these metals. It has also been found that thermal stability which has been maintained by the addition of the metal compounds in the prior art can be maintained by the addition of the hydrazide compound. The present invention has been accomplished by these findings.

That is, according to the present invention, there is provided a polyacetal resin composition comprising 100 parts by weight of a polyacetal polymer (component A), 0.01 to 0.5 part by weight of a hydrazide compound (component B), 0.01 to 0.1 part by weight of an amino-substituted triazine compound (component C) and 0.01 to 5.0 parts by weight of a hindered phenolic compound (component D), wherein
the resin composition has a total content of hydroxides, organic acid salts and inorganic acid salts of an alkali metal and an alkali earth metal of 50 ppm or less by weight in terms of the total of the alkali metal and the alkali earth metal.

The polyacetal resin composition of the present invention has excellent thermal stability and greatly suppresses the emission of formaldehyde from a pellet and molded article thereof. At the same time, the addition of the hydrazide compound can be reduced, whereby the mold deposit is rarely produced. Consequently, this polyacetal resin composition is extremely useful as a material for car interior parts, construction parts for use in houses and schools, and electric parts because it prevents work environment for the production of molded articles from getting worse, particularly the so-called "sick house" syndrome.

### Detailed Description of the Preferred Embodiments

In the resin composition of the present invention, the polyacetal polymer as component A is preferably an polyacetal copolymer comprising an oxymethylene unit as a basic unit and an oxyalkylene unit having 2 or more carbon atoms as a comonomer unit.

The comonomer component constituting the oxyalkylene unit having 2 or more carbon atoms in the polyacetal copolymer is not particularly limited if it is a cyclic ether, glycidyl ether compound or cyclic formal. It is preferably at least one selected from the group consisting of ethylene oxide, propylene oxide, butylene oxide, styrene oxide, methyl glycidyl ether, ethyl glycidyl ether, phenyl glycidyl ether, 1,3-dioxolane, propylene glycol formal, diethylene glycol formal, triethylene glycol formal, 1,4-butanediol formal, 1,5-pentanediol formal and 1, 6-hexanediol formal. Ethylene oxide, 1,3-dioxolane, diethylene glycol formal and 1, 4-butanediol formal are more preferred, and 1, 3-dioxolane is particularly preferred. The polyacetal polymer is obtained by copolymerizing the above comonomer component constituting the oxyalkylene unit having 2 or more carbon atoms with trioxane which is a cyclic trimer of formaldehyde in the presence of a cationic polymerization catalyst.

The content of the oxyalkylene unit having 2 or more carbon atoms in the polyacetal copolymer is 0.1 to 30 mol, preferably 0.3 to 20 mol, more preferably 0.5 to 10 mol based on 100 mol of the oxymethylene unit.

A general cationic catalyst is used as the polymerization catalyst. Examples of the cationic catalyst include Lewis acid, especially halides of boron, tin, titanium, phosphorus, arsenic and antimony, such as boron trifluoride, tin tetrachloride, titanium tetrachloride, phosphorus pentachloride, phosphorus pentafluoride, arsenic pentafluoride and antimony pentafluoride, complex compounds and salts thereof, protonic acid, such as esters of trifluoromethanesulfonic acid, perchloric acid and protonic acid, especially esters of perchloric acid and a lower aliphatic alcohol, protonic anhydride, mixed anhydrides of perchloric acid and a lower aliphatic carboxylic acid, triethyl oxonium hexafluorophosphate, triphenyl methyl hexafluoroarsenate, acetyl hexafluoroborate and heteropoly-acid or acid salts thereof, isopoly acid and acid salts thereof. Compounds comprising boron trifluoride, hydrates of boron trifluoride and coordinated complex compounds are preferred, and boron trifluoride diethyl etherate and boron trifluordie dibutyl etherate which are coordinated complexes of ethers are particularly preferred.

The amount of the polymerization catalyst is generally 1.0 x10⁻⁷ to 2.0 x10⁻³ mol, preferably 1.0 x 10⁻⁷ to 8.0 x 10⁻⁴ mol, more preferably 1.0 x 10⁻⁷ to 1.0 x10⁻⁴ mol based on 1 mol of the total of trioxane and the comonomer. In the present invention, the catalyst is generally deactivated to terminate polymerization when the polymerization yield reaches 90 % or more, preferably 95 % or more, more preferably 97 % or more. Before use, the catalyst is preferably diluted with an organic solvent which has no bad influence upon a polymerization reaction in order to be uniformly dispersed in a reaction system. Examples of the above organic solvent include ethers such as ethylene glycol dimethyl ether, diethylene glycol dimethyl ether and n-butyl ether; aromatic hydrocarbons such as benzene and toluene; aliphatic hydrocarbons such as n-hexane and cyclohexane; and hydrocarbon halides such as methylene dichloride and ethylene dichloride.

The polymerization for obtaining the polyacetal polymer may be carried out with the same equipment and method as the conventionally known polymerization of trioxane. That is, it may be carried out in a batch or continuous manner and may be bulk polymerization or polymerization which is carried out in the presence of an organic solvent such as cyclohexane. A reactor equipped with a stirrer may be used in the batch method, and a kneader, double-screw continuous extrusion kneader or double-screw puddle continuous mixer having powerful stirring ability capable of preventing sudden solidification or heat generation during polymerization, fine temperature controllability and a self-cleaning function for preventing the adhesion of a scale is preferably used for continuous bulk polymerization.

To adjust the molecular weight during polymerization, a low molecular weight acetal compound may be generally used. Methylal, methoxymethylal dimethoxymethylal, trimethoxymethylal or oxymethylene di-n-butyl ether is used as the acetal compound but the present invention is not limited to these. In general, methylal is preferably used. The acetal compound is used in an amount of 0 to 0.1 wt% based on the total of all the monomers according to the target molecular weight.

The catalyst contained in the polyacetal polymer obtained by a polymerization reaction is deactivated or removed by a known method using a deactivator such as a tervalent organic phosphorus compound, amine compound or hydroxide of an alkali metal or alkali earth metal alone or as an aqueous solution or organic solution. Out of these deactivators, a tervalent organic phosphorus compound, tertiary amine and hindered amine are preferred. The amount of the deactivator is not particularly limited if it can deactivate the catalyst but preferably 1.0 x 10⁻¹ to 1.0 x 10¹ based on 1 mol of the catalyst.

For deactivation, the polyacetal polymer is preferably particulate, and the polymerization reactor preferably has the function of fully milling a bulk polymer. When the polyacetal polymer after polymerization is not particulate, the catalyst contained in the polymer is not fully deactivated and depolymerization proceeds gradually by the residual catalyst having activity with the result of a reduction in the molecular weight. Therefore, the deactivator may be added after the polyacetal polymer is milled with a mill separately, or milling and stirring may be carried out at the same time in the presence of the deactivator. The polyacetal polymer obtained after the deactivation of the polymerization catalyst can be molten with an extruder, continuously introduced into a double-screw surface renewal horizontal type kneader in a molten state and supplied into the stabilization step in which vacuum devolatilization is carried out at a temperature higher than its melting point. However, if further purification is required, it may be subjected to washing, unreacted monomer separation/recovery and drying steps.

The above vacuum devolatilization by the double-screw surface renewal horizontal type kneader is carried out at a pressure of 1.01 x10² to 1. 33 x10⁻² kPa while the polyacetal polymer is melt kneaded. When the pressure is higher than the above range, a satisfactory devolatilizing effect is not obtained and when the pressure is lower than the above range, a pressure reducing device becomes bulky, thereby boosting the cost for installing the device. The vacuum devolatilization time is preferably 15 to 60 minutes. When the vacuum devolatilization time is shorter than 15 minutes, a formaldehyde gas from the polyacetal polymer after polymerization cannot be removed completely. When the residence time in the double-screw surface renewal horizontal type kneader whose shearing stress is much lower than that of an extruder is longer than 60 minutes, it is unfavorable that the polyacetal polymer may yellow or its thermal stability may lower due to the decomposition of its main chain. It is also preferred that an inert gas such as nitrogen gas, or alcohol or water which vaporizes under vacuum devolatilization conditions should be introduced into a pressure reducing device for vacuum devolatilization to eliminate the entry of air from the outside or to control the degree of vacuum.

The resin temperature in the inside of the double-screw surface renewal horizontal type kneader during vacuum devolatilization is preferably 190 to 240°C. When the resin temperature is lower than the above range, the molten polyacetal polymer may be crystallized (solidified) and when the temperature is higher than the above range, the polyacetal polymer may yellow, or its thermal stability may lower due to the decomposition of its main chain disadvantageously.

The double-screw surface renewal horizontal type kneader is preferably a kneader which has excellent surface renewability, having a sufficiently large clearance between the agitating blade element and the inner diameter of the kneader and an inner space volume (space excluding the volume occupied by the molten polyacetal polymer) of 20 % or more of the total volume. Preferred example of the kneader include the spectacle blade and lattice blade type reactors of Hitachi, Ltd. , the SCR and NSCR type reactors of Mitsubishi Heavy Industries, Ltd. , and the KRC kneader and SC processor of KURIMOTO Ltd.

The hydrazide compound (component B) contained as a formaldehyde scavenger in the resin composition of the present invention may be an aliphatic or aromatic hydrazide compound. Examples of the aliphatic hydrazide compound include hydrazide propionate, thiocarbohydrazide; dihydrazide oxalate, dihydrazide malonate, dihydrazide succinate, dihydrazide glutarate, dihydrazide adipate, dihydrazide sebacate, dihydrazide dodecanediacid, 1,18-octadecane dicarbohydrazide, dihydrazide maleate, dihydrazide fumarate and 7,11-octadecanediene-1,18-dicarbohydrazide.

Examples of the aromatic hydrazide compound include hydrazide salicylate, dihydrazide terephthalate, hydrazide 3-hydroxy-2-naphthoate, p-toluene sulfonylhydrazide, aminobenzhydrazide, hydrazide 4-pyridine carboxylate, 1,5-naphthalene dicarbohydrazide, 1,8-naphthalene dicarbohydrazide, 2,6-naphthalene dicarbohydrazide, 4,4'-oxybisbenzene sulfonylhydrazide and 1,5-diphenyl carbonohydrazide. Polyhydrazides such as aminopolyacrylamide and 1,3,5-tris(2-hydrazinocarbonylethyl)isocyanurate may also be used.

Out of these hydrazide compounds, dihydrazide compounds are preferred.

The dihydrazide compound used in the present invention is particularly preferably selected from dihydrazide adipate, dihydrazide sebacate, dihydrazide dodecanediacid, 1,18-octadecanedicarbohydrazide, dihydrazide terephthalate, 1,8-naphthalene dicarbohydrazide and 2,6-naphthalene dicarbohydrazide.

The above hydrazide compounds (component B) may be used alone or in combination of two or more. The amount of the hydrazide compound in the composition of the present invention is 0.01 to 0.5 part by weight, preferably 0.02 to 0. 4 part by weight, more preferably 0.03 to 0.3 part by weight based on 100 parts by weight of the polyacetal polymer. When the amount of the hydrazide compound is smaller than 0.01 part by weight, its effect of trapping formaldehyde is not satisfactory and when the amount is larger than 0.5 part by weight, its effect of trapping formaldehyde lowers and the amount of the mold deposit greatly increases.

Examples of the amino-substituted triazine compound (component C) include guanamine, melamine, N-butylmelamine,
N-phenylmelamine, N,N-diphenylmelamine,
N,N-diallylmelamine, N,N',N''-triphenylmelamine,
N,N',N''-trimethylolmelamine, benzoguanamine,
2,4-diamino-6-methyl-sym-triazine,
2,4-diamino-6-butyl-sym-triazine,
2,4-diamino-6-benzyloxy-sym-triazine,
2,4-diamino-6-butoxy-sym-triazine,
2,4-diamino-6-cyclohexyl-sym-triazine,
2,4-diamino-6-chloro-sym-triazine,
2,4-diamino-6-mercapto-sym-triazine,
ammeline(N,N,N',N'-tetracyanoethylbenzoguanamine) and initial polycondensates of these and formaldehyde.

Out of these amino-substituted triazine compounds, melamine, methylolmelamine, benzoguanamine and water-soluble melamine-formaldehyde resin are particularly preferred.

The amount of the amino-substituted triazine compound in the present invention is preferably 0.01 to 0.1 part by weight, more preferably 0.015 to 0.075 part by weight based on 100 parts by weight of the polyacetal polymer.

The resin composition of the present invention comprises a hindered phenolic compound (component D) as an antioxidant. The hindered phenolic compound is not particularly limited but preferably
1,6-hexanediol-bis-[3-(3,5-di-t-butyl-4-hydroxyphenyl) propionate],
pentaerythrityl-tetrakis[3-(3,5-di-t-butyl-4-hydroxyphenyl)propionate], triethylene
glycol-bis[3-(3-t-butyl-5-methyl-4-hydroxyphenyl)propionate], triethylene glycol-bis[3-(3,5-di-t-butyl-4-hydroxyphenyl)propionate] or
2,2'-thiodiethyl-bis-[3-(3,5-di-t-butyl-4-hydroxyphenyl) propionate].

These hindered phenolic compounds may be used alone or in combination of two or more in the present invention. The amount of the hindered phenolic compound is preferably 0.01 to 5.0 parts by weight, more preferably 0.01 to 2.0 parts by weight based on 100 parts by weight of the polyacetal polymer.

It is preferred that the polyacetal resin composition of the present invention should not contain metal-containing compounds selected from the group consisting of hydroxides, organic acid salts and inorganic acid salts of an alkali metal and an alkali earth metal, which is usually used as a stabilizer, as much as possible. The hydroxides of an alkali metal and an alkali earth metal include sodium hydroxide, potassium hydroxide, calcium hydroxide and magnesium hydroxide. The organic acid salts include metal salts such as magnesium salt, calcium salt and barium salt of a higher fatty acid such as lauric acid, palmitic acid, stearic acid, behenic acid or 12-hydroxystearic acid.

The total content of metal compounds selected from the group consisting of hydroxides, organic acid salts and inorganic acid salts of an alkali metal and an alkali earth metal in the polyacetal resin composition of the present invention in terms of metals derived from the metal compounds should be reduced to preferably 50 ppm or less by weight, more preferably 40 ppm or less by weight, most preferably 30 ppm or less by weight based on the polyacetal resin composition.

It is preferred to blend a higher fatty acid amide having a long chain with 10 or more carbon atoms as a release agent with the polyacetal resin composition of the present invention. The higher fatty acid amide having a long chain with 10 or more carbon atoms is not particularly limited but preferably at least one selected from the group consisting of stearic acid amide, ethylene bisstearoamide, methylene bisstearoamide, methylene bislauroamide, palmitic acid amide and oleic acid amide. At least one selected from the group consisting of ethylene bisstearoamide, methylene bisstearoamide and methylene bislauroamide is more preferred.

The amount of the higher fatty acid amide in the present invention is preferably 0.01 to 5 parts by weight, more preferably 0.01 to 3 parts by weight based on 100 parts by weight of the polyacetal polymer.

A polyalkylene glycol, paraffin wax or fatty acid ester of a polyhydric alcohol may be added as another release agent to the polyacetal resin composition of the present invention. Although the polyalkylene glycol, paraffin wax and fatty acid ester of a polyhydric alcohol are not particularly limited, polyalkylene glycols such as polyethylene glycol and polypropylene glycol, and esters of a polyhydric alcohol such as glycerin, diglycerin, pentaerythritol, sorbitan, ethylene glycol, diethylene glycol, trimethylolmethane or trimethylolethane and a fatty acid such as behenic acid, cerotic acid, montanic acid or lacceric acid are preferred.

The total amount of the polyalkylene glycol, paraffin wax and fatty acid ester of a polyhydric alcohol in the present invention is 0.01 to 5 parts by weight, more preferably 0.01 to 3 parts by weight based on 100 parts by weight of the polyacetal polymer.

A nucleating agent may be added to the polyacetal resin composition of the present invention in order to improve moldability and shorten the molding cycle. The nucleating agent is not particularly limited but preferably boron nitride, hydrous magnesium silicate or three-dimensional crosslinked polyacetal.

The amount of the nucleating agent in the present invention is preferably 0.0001 to 10.0 parts by weight, more preferably 0.001 to 5.0 parts by weight based on 100 parts by weight of the polyacetal polymer.

A coumarin-based fluorescent brightener or benzoxazole-based fluorescent brightener may be added to the polyacetal resin composition of the present invention as a fluorescent brightener. Preferred examples of the coumarin-based fluorescent brighter and benzoxazole-based fluorescent brightener include
3-(4'-acetylaminophenyl)-7-acetylaminocoumarin,
3-(4'-carboxyphenyl)-4-methyl-7-diethylaminocoumarin,
2,5-bis(5'-t-butylbenzoxazol-2'-yl)thiophene and
2,5-bis[5'-t-butylbenzoxazolyl(2)]thiophene.

The total amount of the coumarin-based fluorescent brightener and benzoxazole-based fluorescent brightener in the present invention is preferably 0.001 to 500 ppm by weight, more preferably 0.01 to 100 ppm by weight based on the polyacetal polymer.

Known additives and/or filler excluding the hydroxides, organic acid salts and inorganic acid salts of an alkali metal and an alkali earth metal may be added to the polyacetal resin composition of the present invention in limits that do not impair the object of the present invention in addition to the above components. The additives include an antistatic agent, ultraviolet light absorber and optical stabilizer.

To prepare the polyacetal resin composition of the present invention, the amino-substituted triazine compound (component C) and the hindered phenolic compound (component D) are melt kneaded with the polyacetal polymer (component A) containing a polymerization catalyst deactivator to prepare a preliminary resin composition containing no hydrazide compound (component B), and then the hydrazide compound (component B) is mixed with the preliminary resin composition. To obtain this preliminary resin composition, preferably, a mixture of the components A, C and D is melt kneaded by a single-screw or double-screw extruder and continuously introduced into a double-screw surface renewal horizontal type kneader in a molten state to carry out vacuum devolatilized at a temperature higher than its melting point for stabilization so as to reduce the heat weight loss to 0.6 wt% or less. The thus obtained stabilized preliminary resin composition is mixed with the hydrazide compound (component B) by a tumbler type blender and melt kneaded under heating by a single-screw or double-screw extruder to obtain a desired polyacetal resin composition.

To add the hydrazide compound (component B), preferably, it is mixed with a preliminary resin composition having a heat weight loss of 0.6 wt% or less after stabilization and melt kneaded under heating by the above method. It is melt kneaded under heating more preferably with a preliminary resin composition having a heat weight loss of 0.5 wt% or less, particularly preferably with a preliminary resin composition having a heat weight loss of 0.4 wt% or less.

It is included as a method other than the above methods to add the hydrazide compound (component B) that a polyacetal polymer (component A) whose polymerization has been stopped, amino-substituted triazine compound (component C), stabilizers such as a hindered phenolic compound (component D) and the hydrazide compound (component B) are mixed together by a Henschel mixer, molten by a double-screw extruder, and continuously introduced into a double-screw surface renewal horizontal type mixer in a molten state to carry out vacuum volatilization at a temperature higher than the melting point for stabilization.

Molded articles of the polyacetal resin composition of the present invention can be obtained in accordance with the known method of molding a polyacetal resin. Molded articles obtained from the resin composition of the present invention include materials such as pellets, round bars and thick plates, sheets, tubes, vessels, mechanical parts, electric parts, auto parts, construction materials and other parts. The present invention is not limited to these.

Since the polyacetal resin composition obtained by the present invention has excellent thermal stability and suppresses the emission of formaldehyde from its product, it is extremely useful for construction parts, electric parts and car interior parts which prevent the so-called "sick house" syndrome.

The melt flow index (MI) (measurement conditions: 190°C, load of 2,160 g) of the polyacetal resin composition of the present invention is not particularly limited but generally 0.5 to 100 g/10 min, preferably 1.0 to 70 g/10 min.

### Examples

The following examples and comparative examples are provided for the purpose of further illustrating the present invention but are in no way to be taken as limiting. Terms and measurement methods in the examples and comparative examples are shown below.
Process for manufacturing polyacetal polymer (component A):
100 parts by weight of trioxane, 4 parts by weight of 1,3-dioxolane, 0.05 mmol of a benzene solution of boron trifluoride diethyl etherate as a catalyst based on 1 mol of the total of all the monomers and 500 ppm by weight of a benzene solution of methylal as a molecular weight control agent based on the total of all the monomers were continuously added to a double-screw continuous polymerizer having a self-cleaning puddle with a jacket set to 65° C to carry out polymerization continuously for a residence time of 20 minutes.
2 mol of a benzene solution of triphenyl phosphine based on 1 mol of the boron trifluoride diethyl etherate was added to the obtained polymer to deactivate the catalyst, and the obtained product was milled to produce a polyacetal polymer (component A) . The yield of the polymer was 95%. The melt index (MI) of the polymer was 10.5 g/10 min.

### Examples 1 to 21 and Comparative Examples 1 to 7

An amino-substituted triazine compound (component C) and a hindered phenolic compound (component D) were mixed with 100 parts by weight of the obtained polyacetal polymer (component A) by a Henschel mixer according to formulations shown in Tables 1 to 3. In Examples 12 and 13 and Comparative Examples 4 and 5, magnesium hydroxide or calcium stearate was composed to ensure that contents of metals based on polyacetal resin composition to be finally obtained become as shown in Tables 1 to 3. The obtained mixture was then introduced into a co-rotation double-screw extruder (of The Japan Steel Works Ltd. inner diameter of 69 mm, L/D ratio of 31.5) at a rate of 60 kg/h, and the obtained polyacetal polymer containing components C and D was molten in a vent portion at 220°C under a reduced pressure of 20 kPa at vent portion and continuously introduced into a double-screw surface renewal horizontal type kneader (effective inside volume of 60 liters: volume obtained by excluding the volume occupied by the agitating element from the total inside volume). The liquid level was adjusted to ensure that the residence time in the double-screw surface renewal horizontal type kneader became 25 minutes, and the resulting kneaded product was pelletized by extracting it with a gear pump continuously while vacuum devolatilization was carried out at 220°C and a reduced pressure of 20 kPa so as to obtain a preliminary resin composition having a heat weight loss shown in Tables 1 to 3.

The obtained preliminary resin composition and a hydrazide compound (component B) were mixed together by a tumbler type blender, and the obtained mixture was melt kneaded by a single-screw extruder (of Tanabe Plastics Machinery Co., Ltd., model: VS-40) at a cylinder temperature of 200° C and a discharge rate of 13 kg/h to produce a pellet of a desired polyacetal resin composition.

The emission of formaldehyde from a molded article of the specimen obtained by the above method was measured by the following method, and the thermal stability and mold deposit of the molded article were evaluated. The results are shown in Tables 1 to 3.

### <evaluation method>

(a) Emission of formaldehyde: A flat plate measuring 100 mm x 40 mm x 2 mm (thickness) molded from the resin composition obtained in example or comparative example at a cylinder temperature of 215° C by using the PS-40E5ASE molding machine of Nissei Plastic Industrial Co. , Ltd. was used as a specimen to measure the emission of formaldehyde therefrom in accordance with the method specified in the VDA275 (Automobile Interior Parts - the determination of the emission of formaldehyde by the modified flask method) standards of the Automobile Industrial Association of Germany on the day following the molding.
   (i) 50 ml of distilled water was injected into a polyethylene vessel which was then closed while the specimen was hung, kept airtight and maintained at 60°C for 3 hours.
   (ii) After the vessel was left at room temperature for 60 minutes, the specimen was taken out from the vessel.
   (iii) The amount of formaldehyde absorbed into distilled water in the polyethylene vessel was measured by an acetylacetone colorimetric method using an UV spectrometer.
(b) Emission of formaldehyde after heating and humidification: The resin composition obtained in example or comparative example was humidified by using the thermohygrostat of Espec Corp. (set conditions: 60° C, 90 %RH, 48 hours). Thereafter, the emission of formaldehyde from the resin composition was measured in the method described in the paragraph (a).
(c) Thermal stability: A flat plate measuring 10 mm x 40 mm x 2 mm (thickness) was molded from the resin composition obtained in example or comparative example at a cylinder temperature of 220°C for cycle time of 10 minutes by using the PS-40E5ASE molding machine of Nissei Plastic Industrial Co., Ltd. as a specimen, and the molding stability (coloring, the existence of a silver streak) of the resin composition while resident in the molding machine was observed. The thermal stability of the specimen was evaluated based on 6 grades (1, 2, 3, 4, 5 and 6).
(d) Mold deposit: The resin composition obtained in example or comparative example was molded 500 shots continuously at a molding temperature of 230° C and a mold temperature of 35° C by using a drip mold and the Minimat M8/7A molding machine of Sumitomo Heavy Industries, Ltd. After the end of molding, a mold deposit was observed to evaluate mold contamination based on 6 grades (1, 2, 3, 4, 5 and 6).
(e) heat weight loss: After each of the preliminary resin compositions obtained in Examples 1 to 21 and Comparative Examples 1 to 7 before the hydrazide compound was added was dried at normal pressure and 100°C for 30 minutes, the weight of the specimen was measured. The specimen was then placed in a test tube, the inside of the tube was substituted by nitrogen, and the specimen was heated at 222°C under a reduced pressure of 1, 333 Pa for 2 hours to measure its weight. The heat weight loss rate of the specimen was obtained by dividing a reduction in weight by the original weight of the specimen.

**Table 1**

| | | Ex.1 | Ex.2 | Ex.3 | Ex.4 | Ex.5 | Ex.6 | Ex.7 | Ex.8 | Ex.9 | Ex.10 | Ex.11 |
|---|---|---|---|---|---|---|---|---|---|---|---|---|
| Polyacetal polymer | parts by weight | 100 | 100 | 100 | 100 | 100 | 100 | 100 | 100 | 100 | 100 | 100 |
| Hydrazide compound 1 | parts by weight | 0.08 | 0 | 0 | 0 | 0 | 0 | 0 | 0 | 0 | 0 | 0 |
| Hydrazide compound 2 | parts by weight | 0 | 0.08 | 0 | 0 | 0 | 0 | 0 | 0 | 0 | 0 | 0 |
| Hydrazide compound 3 | parts by weight | 0 | 0 | 0.08 | 0 | 0.05 | 0.1 | 0.4 | 0 | 0 | 0.08 | 0.08 |
| Hydrazide compound 4 | parts by weight | 0 | 0 | 0 | 0.08 | 0 | 0 | 0 | 0.05 | 0.1 1 | 0 | 0 |
| Hindered phenolic compound | parts by weight | 0.3 | 0.3 | 0.3 | 0.3 | 0.3 | 0.3 | 0.3 | 0.3 | 0.3 | 0.3 | 0.3 |
| Amine-substituted triazine compound | parts by weight | 0.05 | 0.05 | 0.05 | 0.05 | 0.05 | 0.05 | 0.05 | 0.05 | 0.05 | 0.01 | 0.1 |
| Metal component-1 | weight ppm | 0 | 0 | 0 | 0 | 0 | 0 | 0 | 0 | 0 | 0 | 0 |
| Metal component-2 | weight ppm | 0 | 0 | 0 | 0 | 0 | 0 | 0 | 0 | 0 | 0 | 0 |
| emission of formaldehyde | µg/g-POM | 1 | 0.5 | 0.2 | 0.2 | 0.3 | 0.2 | 0.5 | 0.2 | 0.2 | 0.4 | 0.5 |
| Emission of formaldehyde after heating and humidification | µg/g-POM | 1.2 | 1 | 0.3 | 0.3 | 1.0 | 0.2 | 1.0 | 0.3 | 0.2 | 0.7 | 1.0 |
| Heat weight loss (before addition of hydrazide compound) | % | 0.2 | 0.2 | 0.2 | 0.2 | 0.2 | 0.2 | 0.2 | 0.2 | 0.2 | 0.2 | 0.2 |
| Thermal stability | | 1 | 1 | 1 | 1 | 1 | 1 | 1 | 1 | 1 | 2 | 1 |
| Mold deposit | | 1 | 1 | 1 | 1 | 1 | 1 | 2 | 1 | 2 | 1 | 1 |

| | | | | | | | | | | | | |
|---|---|---|---|---|---|---|---|---|---|---|---|---|
| Ex.: Example C.Ex.: Comparative Example | | | | | | | | | | | | |

### <Explanation of terms and compounds in the table)

Hydrazide compound-1: dihydrazide adipate
Hydrazide compound-2: dihydrazide sebacate
Hydrazide compound-3: dihydrazide dodecanediacid
Hydrazide compound-4: dihydrazide terephthalate
Hindered phenolic compound: triethylene glycol-bis(3-t-butyl-5-methyl-4-hydroxyphenyl)propionate Amine-substituted triazine compound: melamine
Metal component-1: magnesium derived from magnesium hydroxide based on the polyacetal resin composition
Metal component-2: calcium derived from calcium stearate based on the polyacetal resin composition

**Table 2**

| | | Ex.12 | Ex.13 | Ex.14 | Ex.15 | Ex.16 | Ex.17 | Ex.18 | Ex.19 | Ex.20 | Ex.21 |
|---|---|---|---|---|---|---|---|---|---|---|---|
| Polyacetal polymer | parts by weight | 100 | 100 | 100 | 100 | 100 | 100 | 100 | 100 | 100 | 100 |
| Hydrazide compound 1 | parts by weight | 0 | 0 | 0 | 0 | 0.08 | 0 | 0 | 0.08 | 0 | 0 |
| Hydrazide compound 2 | parts by weight | 0 | 0 | 0 | 0 | 0 | 0.08 | 0 | 0 | 0.08 | 0 |
| Hydrazide compound 3 | parts by weight | 0.08 | 0.08 | 0.08 | 0.08 | 0.08 | 0.08 | 0.08 | 0 | 0 | 0.05 |
| Hydrazide compound 4 | parts by weight | 0 | 0 | 0 | 0 | 0 | 0 | 0.05 | 0.05 | 0.05 | 0.05 |
| Hindered phenolic compound | parts by weight | 0.3 | 0.3 | 0.1 | 5 | 0.3 | 0.3 | 0.3 | 0.3 | 0.3 | 0.3 |
| Amine-substituted triazine compound | parts by weight | 0.05 | 0.05 | 0.05 | 0.05 | 0.05 | 0.05 | 0.05 | 0.05 | 0.05 | 0.05 |
| Metal component-1 | weight ppm | 30 | 0 | 0 | 0 | 0 | 0 | 0 | 0 | 0 | 0 |
| Metal component-2 | weight ppm | 0 | 30 | 0 | 0 | 0 | 0 | 0 | 0 | 0 | 0 |
| emission of formaldehyde | µg/g-POM | 0.8 | 1 | 1 | 0.8 | 0.5 | 0.4 | 0.3 | 0.8 | 0.6 | 0.3 |
| Emission of formaldehyde after heating and humidification | µg/g-POM | 2.0 | 1.5 | 1.5 | 1.0 | 0.6 | 0.5 | 0.4 | 10 | 0.8 | 0.5 |
| Heat weight loss (before addition of compound) | % | 0.2 | 0.2 | 0.4 | 0.2 | 0.2 | 0.2 | 0.2 | 0.2 | 0.3 | 0.2 |
| hydrazide Thermal stability | | 1 | 1 | 2 | 1 | 1 | 1 | 1 | 1 | 1 | 1 |
| Mold deposit | | 1 | 1 | 1 | 2 | 2 | 2 | 2 | 2 | 2 | 1~2 |

| | | | | | | | | | | | |
|---|---|---|---|---|---|---|---|---|---|---|---|
| Ex.: Example C.Ex.: Comparative Example | | | | | | | | | | | |

### <Explanation of terms and compounds in the table>

Hydrazide compound-1: dihydrazide adipate
Hydrazide compound-2: dihydrazide sebacate
Hydrazide compound-3: dihydrazide dodecanediacid
Hydrazide compound-4: dihydrazide terephthalate
Hindered phenolic compound: triethylene glycol-bis(3-t-butyl-5-methyl-4-hydroxyphenyl)propionate
Amine-substituted triazine compound: melamine
Metal component-1: magnesium derived from magnesium hydroxide based on the polyacetal resin composition
Metal component-2: calcium derived from calcium stearate based on the polyacetal resin composition

**Table 3**

| | | C.Ex.1 | C.Ex.2 | C.Ex.3 | C.Ex.4 | C.Ex.5 | C.Ex.6 | C.Ex.7 |
|---|---|---|---|---|---|---|---|---|
| Polyacetal polymer | parts by weight | 100 | 100 | 100 | 100 | 100 | 100 | 100 |
| Hydrazide compound 1 | parts by weight | 0 | 0 | 0 | 0 | 0 | 0 | 0 |
| Hydrazide compound 2 | parts by | 0 | 0 | 0 | 0 | 0 | 0 | 0 |
| Hydrazide compound 3 | weight parts by weight | 0 | 1.0 | 0.08 | 0.08 | 0.08 | 0.08 | 0.08 |
| Hydrazide compound 4 | parts by weight | 0 | 0 | 0 | 0 | 0 | 0 | 0 |
| Hindered phenolic compound | parts by weight | 0.3 | 0.3 | 0.3 | 0.3 | 0.3 | 0.3 | 0 |
| Amine-substituted triazine compound | parts by weight | 0.05 | 0.05 | 0.5 | 0.05 | 0.05 | 0 | 0.05 |
| Metal component-1 | weight ppm | 0 | 0 | 0 | 100 | 0 | 0 | 0 |
| Metal component-2 | weight ppm | 0 | 0 | 0 | 0 | 100 | 0 | 0 |
| emission of formaldehyde | µg/g-POM | 4 | 2 | 5 | 2 | 4 | 2 | 4 |
| Emission of formaldehyde heating and humidification | µg/g-after POM | 5 | 5 | 10 | 15 | 7 | 10 | 10 |
| Heat weight loss (before addition of hydrazide compound) | % | 0.2 | 0.3 | 0.4 | 0.2 | 0.2 | 0.7 | 0.8 |
| Thermal stability | | 2 | 2 | 1 | 1 | 1 | 3 | 4 |
| Mold deposit | | 1 | 5 | 2 | 1 | 1 | 1 | 1 |

| | | | | | | | | |
|---|---|---|---|---|---|---|---|---|
| Ex.: Example C.Ex.: Comparative Example | | | | | | | | |

### <Explanation of terms and compounds in the table>

Hydrazide compound-1: dihydrazide adipate
Hydrazide compound-2: dihydrazide sebacate
Hydrazide compound-3: dihydrazide dodecanediacid
Hydrazide compound-4: dihydrazide terephthalate
Hindered phenolic compound: triethylene glycol-bis(3-t-butyl-5-methyl-4-hydroxyphenyl)propionate
Amine-substituted triazine compound: melamine
Metal component-1: magnesium derived from magnesium hydroxide based on the polyacetal resin composition
Metal component-2: calcium derived from calcium stearate based on the polyacetal resin composition

## Claims

1. A polyacetal resin composition comprising 100 parts by weight of a polyacetal polymer (component A), 0.01 to 0.5 part by weight of a hydrazide compound (component B), 0.01 to 0.1 part by weight of an amino-substituted triazine compound (component C) and 0.01 to 5 parts by weight of a hindered phenolic compound (component D), wherein
the resin composition has a total content of hydroxides, organic acid salts and inorganic acid salts of an alkali metal and an alkali earth metal of 50 ppm or less by weight in terms of the total of the alkali metal and the alkali earth metal.

2. The polyacetal resin composition according to claim 1, wherein the polyacetal polymer (component A) contains 0.1 to 30 mol of an oxyalkylene unit having 2 or more carbon atoms based on 100 mol of an oxymethylene unit constituting the polymer.

3. The polyacetal resin composition according to claim 1, wherein the hydrazide compound (component B) is contained in an amount of 0.02 to 0.4 part by weight based on 100 parts by weight of the polyacetal polymer (component A).

4. The polyacetal resin composition according to claim 1, wherein the amino-substituted triazine compound (component C) is contained in an amount of 0.015 to 0.075 part by weight based on 100 parts by weight of the polyacetal polymer (component A).

5. The polyacetal resin composition according to claim 1, wherein the hindered phenolic compound (component D) is contained in an amount of 0.01 to 2 parts by weight based on 100 parts by weight of the polyacetal polymer (component A).

6. The polyacetal resin composition according to claim 1 which has a total metal content of 40 ppm or less by weight.

7. The polyacetal resin composition according to claim 1, wherein the hydrazide compound (component B) is a dihydrazide compound.

8. The polyacetal resin composition according to claim 1, wherein the hydrazide compound (component B) is at least one dihydrazide compound selected from the group consisting of dihydrazide adipate, dihydrazide sebacate, dihydrazide dodecanediacid, 1,18-octadecane dicarbohydrazide, dihydrazide terephthalate, 1,8-naphthalene dicarbohydrazide and 2,6-naphthalene dicarbohydrazide.

9. The polyacetal resin composition according to claim 1, wherein the amino-substituted triazine compound (component C) is at least one selected from the group consisting of melamine, methylolmelamine, benzoguanamine and water-soluble melamine-formaldehyde resin.

10. The polyacetal resin composition according to claim 1 which is prepared by mixing a hydrazide compound (component B) with a preliminary resin composition comprising a polyacetal polymer (component A), an amino-substituted triazine compound (component C) and a hindered phenolic compound (component D) but not the hydrazide compound (component B).

11. The polyacetal resin composition according to claim 10, wherein the preliminary resin composition has a heat weight loss of 0.6 wt% or less when it is heated at 222°C under a reduced pressure of 1,333 Pa for 2 hours.

12. A process for manufacturing the polyacetal resin composition of claim 1, comprising the step of mixing a hydrazide compound (component B) with a preliminary resin composition comprising a polyacetal polymer (component A), an amino-substituted triazine compound (component C) and a hindered phenolic compound (component D) but not the hydrazide compound (component B).

13. The process for manufacturing the polyacetal resin composition according to claim 12, wherein the preliminary resin composition has a heat weight loss of 0.6 wt% or less when it is heated at 222° C under a reduced pressure of 1,333 Pa for 2 hours.

14. A molded article formed from the polyacetal resin composition of claim 1.

15. A molded article formed from a polyacetal resin composition obtained by the process of claim 12.

## Patentansprüche

1. Polyacetalharzzusammensetzung, umfassend 100 Gewichtsteile eines Polyacetalpolymers (Komponente A), 0,01 bis 0,5 Gewichtsteile einer Hydrazidverbindung (Komponente B), 0,01 bis 0,1 Gewichtsteile einer aminosubstituierten Triazinverbindung (Komponente C) und 0,01 bis 5 Gewichtsteile einer (sterisch) gehinderten phenolischen Verbindung (Komponente D), wobei
die Harzzusammensetzung einen Gesamtgehalt an Hydroxiden, organischen Säuresalzen und anorganischen Säuresalzen eines Alkalimetalls und eines Erdalkalimetalls von 50 Gewichts-ppm oder weniger als Summe des Alkalimetalls und des Erdalkalimetalls hat.

2. Polyacetalharzzusammensetzung gemäß Anspruch 1, wobei das Polyacetalpolymer (Komponente A) 0,1 bis 30 Mol einer Oxyalkyleneinheit mit 2 oder mehr Kohlenstoffatomen, bezogen auf 100 Mol einer Oxymethyleneinheit, die das Polymer bildet, enthält.

3. Polyacetalharzzusammensetzung gemäß Anspruch 1, wobei die Hydrazidverbindung (Komponente B) in einer Menge von 0,02 bis 0,4 Gewichtsteilen, bezogen auf 100 Gewichtsteile des Polyacetalpolymers (Komponente A), enthalten ist.

4. Polyacetalharzzusammensetzung gemäß Anspruch 1, wobei die aminosubstituierte Triazinverbindung (Komponente C) in einer Menge von 0,015 bis 0,075 Gewichtsteilen, bezogen auf 100 Gewichtsteile des Polyacetalpolymers (Komponente A), enthalten ist.

5. Polyacetalharzzusammensetzung gemäß Anspruch 1, wobei die (sterisch) gehinderte phenolische Verbindung (Komponente D) in einer Menge von 0,01 bis 2 Gewichtsteilen, bezogen auf 100 Gewichtsteile des Polyacetalpolymers (Komponente A), enthalten ist.

6. Polyacetalharzzusammensetzung gemäß Anspruch 1, die einen Gesamtmetallgehalt von 40 Gewichts-ppm oder weniger hat.

7. Polyacetalharzzusammensetzung gemäß Anspruch 1, wobei die Hydrazidverbindung (Komponente B) eine Dihydrazidverbindung ist.

8. Polyacetalharzzusammensetzung gemäß Anspruch 1, wobei die Hydrazidverbindung (Komponente B) wenigstens eine Dihydrazidverbindung, ausgewählt aus der Gruppe, bestehend aus Dihydrazidadipat, Dihydrazidsebacat, Dihydraziddodecandisäure, 1,18-Octadecandicarbohydrazid, Dihydrazidterephthalat, 1,8-Naphthalindicarbohydrazid und 2,6-Naphthalindicarbohydrazid, ist.

9. Polyacetalharzzusammensetzung gemäß Anspruch 1, wobei die aminosubstituierte Triazinverbindung (Komponente C) wenigstens eine ist, die aus der Gruppe, bestehend aus Melamin, Methylolmelamin, Benzoguanamin und wasserlöslichem MelaminFormaldehyd-Harz, ausgewählt ist.

10. Polyacetalharzzusammensetzung gemäß Anspruch 1, die durch Mischen einer Hydrazidverbindung (Komponente B) mit einer vorläufigen Harzzusammensetzung, die ein Polyacetalpolymer (Komponente A), eine aminosubstituierte Triazinverbindung (Komponente C) und eine (sterisch) gehinderte phenolische Verbindung (Komponente D), aber nicht die Hydrazidverbindung (Komponente B) umfasst, hergestellt wird.

11. Polyacetalharzzusammensetzung gemäß Anspruch 10, wobei die vorläufige Harzzusammensetzung einen Wärmegewichtsverlust von 0,6 Gew.-% oder weniger hat, wenn sie unter einem reduzierten Druck von 1333 Pa für zwei Stunden auf 222°C erwärmt wird.

12. Verfahren zur Herstellung der Polyacetalharzzusammensetzung gemäß Anspruch 1, umfassend den Schritt eines Mischens einer Hydrazidverbindung (Komponente B) mit einer vorläufigen Harzzusammensetzung, die ein Polyacetalpolymer (Komponente A), eine aminosubstituierte Triazinverbindung (Komponente C) und eine (sterisch) gehinderte phenolische Verbindung (Komponente D), aber nicht die Hydrazidverbindung (Komponente B) umfasst.

13. Verfahren zur Herstellung der Polyacetalharzzusammensetzung gemäß Anspruch 12, wobei die vorläufige Harzzusammensetzung einen Wärmegewichtsverlust von 0,6 Gew.-% oder weniger hat, wenn sie unter einem reduzierten Druck schon 1333 Pa für zwei Stunden auf 222°C erwärmt wird.

14. Geformter Gegenstand, geformt aus der Polyacetalharzzusammensetzung gemäß Anspruch 1.

15. Geformter Gegenstand, geformt aus einer Polyacetalharzzusammensetzung, die durch das Verfahren von Anspruch 12 erhalten wird.

## Revendications

1. Composition de résine de polyacétal, comprenant 100 parties en poids d'un polymère de polyacétal (composant A), 0,01 à 0,5 partie en poids d'un composé d'hydrazide (composant B), 0,01 à 0,1 partie en poids d'un composé de triazine amino-substitué (composant C) et 0,01 à 5 parties en poids d'un composé phénolique encombré (composant D), dans laquelle
la composition de résine présente une teneur totale en hydroxydes, en sels d'acide organique et en sels d'acide inorganique de métal alcalin et de métal alcalino-terreux inférieure ou égale à 50 ppm en poids en termes du total du métal alcalin et du métal alcalino-terreux.

2. Composition de résine de polyacétal selon la revendication 1, dans laquelle le polymère de polyacétal (composant A) contient 0,1 mole à 30 moles d'un motif d'oxyalkylène contenant au moins 2 atomes de carbone sur la base de 100 moles d'un motif d'oxyméthylène constituant le polymère.

3. Composition de résine de polyacétal selon la revendication 1, dans laquelle le composé d'hydrazide (composant B) est contenu en une quantité de 0,02 à 0,4 partie en poids sur la base de 100 parties en poids du polymère de polyacétal (composant A).

4. Composition de résine de polyacétal selon la revendication 1, dans laquelle le composé de triazine amino-substitué (composant C) est contenu en une quantité de 0,015 à 0,075 partie en poids sur la base de 100 parties en poids du polymère de polyacétal (composant A).

5. Composition de résine de polyacétal selon la revendication 1, dans laquelle le composé phénolique encombré (composant D) est contenu en une quantité de 0,01 à 2 parties en poids sur la base de 100 parties en poids du polymère de polyacétal (composant A).

6. Composition de résine de polyacétal selon la revendication 1, dont la teneur totale en métaux est inférieure ou égale à 40 ppm en poids.

7. Composition de résine de polyacétal selon la revendication 1, dans laquelle le composé d'hydrazide (composant B) est un composé de dihydrazide.

8. Composition de résine de polyacétal selon la revendication 1, dans laquelle le composé d'hydrazide (composant B) est au moins un composé de dihydrazide choisi dans le groupe constitué par le dihydrazide de l'acide adipique, le dihydrazide de l'acide sébacique, le dihydrazide du dodécanediacide, le 1,18-octadécane dicarbohydrazide, le dihydrazide de l'acide téréphtalique, le 1,8-naphtalène dicarbohydrazide et le 2,6-naphtalène dicarbohydrazide.

9. Composition de résine de polyacétal selon la revendication 1, dans laquelle le composé de triazine amino-substitué (composant C) est au moins un composé choisi le groupe constitué par la mélamine, la méthylolmélamine, la benzoguanamine et une résine de mélamine-formaldéhyde hydrosoluble.

10. Composition de résine de polyacétal selon la revendication 1, qui est préparée par le mélange d'un composé d'hydrazide (composant B) avec une composition préliminaire de résine comprenant un polymère de polyacétal (composant A), un composé de triazine amino-substitué (composant C) et un composé phénolique encombré (composant D) mais pas le composé d'hydrazide (composant B).

11. Composition de résine de polyacétal selon la revendication 10, dans laquelle la composition préliminaire de résine présente une perte de poids en présence de chaleur inférieure ou égale à 0,6 % en poids quand elle est chauffée à 222 °C sous une pression réduite de 1 333 Pa pendant 2 heures.

12. Procédé de fabrication de la composition de résine de polyacétal selon la revendication 1, comprenant l'étape de mélange d'un composé d'hydrazide (composant B) avec une composition préliminaire de résine comprenant un polymère de polyacétal (composant A), un composé de triazine amino-substitué (composant C) et un composé phénolique encombré (composant D) mais pas le composé d'hydrazide (composant B).

13. Procédé de fabrication de la composition de résine de polyacétal selon la revendication 12, dans lequel la composition préliminaire de résine présente une perte de poids en présence de chaleur inférieure ou égale à 0,6 % en poids quand elle est chauffée à 222 °C sous une pression réduite de 1 333 Pa pendant 2 heures.

14. Article moulé formé à partir de la composition de résine de polyacétal selon la revendication 1.

15. Article moulé formé à partir d'une composition de résine de polyacétal obtenue par le procédé selon la revendication 12.
